# EUROPÄISCHE PATENTSCHRIFT

(11) **EP 1 258 964 B1**
(45) Veröffentlichungstag und Bekanntmachung des Hinweises auf die Patenterteilung: **12.02.2014**
(21) Anmeldenummer: 02090156.7
(22) Anmeldetag: 23.04.2002
(51) Int. Cl.: H02G 5/06

(54) **Säulenförmiger Stützer zur Abstützung eines Hochspannung führenden Leiters**
Column shaped support for high voltage conductor
Support en forme de colonnes pour conducteur haute tension

(30) Priorität: 16.05.2001 DE 10125300
(43) Veröffentlichungstag der Anmeldung: 20.11.2002
(73) Patentinhaber: Siemens Aktiengesellschaft, 80333 München (DE)
(72) Erfinder: Diessner, Armin, 10711 Berlin (DE); Kieper, Mario, 14612 Falkensee (DE); Maas, Axel, 12527 Berlin (DE); Swiatkowski, Gernot, Dr., 13629 Berlin (DE)

(56) Entgegenhaltungen:
- US-A- 4 084 064
- US-A- 4 297 523
- US-A- 4 414 424

## Beschreibung

Die Erfindung liegt auf dem Gebiet der Energie-Übertragung und -Verteilung und ist bei der konstruktiven Ausgestaltung eines säulenförmigen Stützers anzuwenden, der bei Hochspannungsanlagen, insbesondere bei gasisolierten Rohrleiteranlagen, zur isolierenden Abstützung eines Hochspannung führenden Leiters an der den Leiter umschließenden metallenen Kapselung dient.

Zur zentrischen Anordnung eines Hochspannung führenden Leiters in einer rohrförmigen Kapselung ist es gebräuchlich, dem horizontal verlaufenden Leiter in Abständen zwei säulenförmige Stützer zuzuordnen, die gegenläufig gegen die Vertikale geneigt angeordnet sind. Die Stützer bestehen aus Isolierstoff und sind jeweils in den Leiter eingesteckt (DE 195 15 308 C1). Um eine sichere Auflage des jeweiligen Stützers am Kapselungsrohr zu gewährleisten, besteht der Stützer aus einem Isolatorkörper und einem gesonderten, im Fußbereich des Stützers angeordneten Standkörper, wobei der Standkörper beweglich mit dem Isolatorkörper verbunden ist. Diese bewegliche Verbindung wird vorzugsweise mit einer kugeligen Gelenkpfanne am Isolatorkörper realisiert, in der sich der Standkörper mittels einer konvex ausgebildeten sphärischen Oberfläche gelenkkopfartig abstützt. Dabei kann der Isolatorkörper aus einem Epoxydharz und der Standkörper aus PTFE bestehen. Die Halterung des Standkörpers im Isolatorkörper kann durch elastisch oder plastisch verformbare Noppen im Grenzbereich Gelenkpfanne/Gelenkkopf oder durch eine gelartige Haftmasse gewährleistet sein (DE 195 17 591 C1).

Ausgehend von einem säulenförmigen Stützer mit den Merkmalen des Oberbegriffes des Patentanspruches 1 liegt der Erfindung die Aufgabe zugrunde, den säulenförmigen Stützer im Fußbereich hinsichtlich seiner elektrischen, thermischen und mechanischen Belastbarkeit zu optimieren.

Zur Lösung dieser Aufgabe ist gemäß der Erfindung vorgesehen, dass die Gelenkpfanne des Isolatorkörpers aus einer im Fußbereich des Isolatorkörpers eingebetteten Elektrode besteht, die mit einem der Kontaktierung des Kapselungsrohres dienenden Kontaktelement versehen ist und dass der Standkörper an der Elektrode bewegbar gehaltert ist, wobei das Kontaktelement durch den Standkörper hindurchgeführt ist.

Die gemäß der Erfindung vorgesehene Elektrode ermöglicht es, den Standkörper dielektrisch vollkommen zu entlasten, so dass die Isolierfestigkeit des hierfür verwendeten Materials nicht mehr relevant ist. Für den Standkörper kann daher ein Material gewählt werden, das ausschließlich den thermischen und mechanischen Beanspruchungen optimal genügt. Als besonders geeignet hat sich ein unter dem Handelsnamen "Delrin" bekannter Kunststoff erwiesen, bei dem es sich um ein mit PTFE-Fasern angereichertes Polyoxymethylen (POM) handelt. - Die mechanische Belastung des Standkörpers, insbesondere die spezifische Flächenpressung im Auflagebereich kann dadurch verringert werden, dass der Standkörper mit einer möglichst großen Fläche an dem Kapselungsrohr anliegt. Hierzu empfiehlt es sich, die Auflagefläche des Standkörpers der Innengeometrie des Kapselungsrohres anzupassen. Dies hat eine höhere thermische Dauerfestigkeit des Standkörpers zur Folge. - Zur Verbesserung der mechanischen Festigkeit im Sinne einer hohen Sicherheit gegen Abrieb kann dabei die zylindrische Auflagefläche des Standkörpers mit zwei beidseits des Kontaktelementes parallel zueinander und parallel zur Achse der zylindrischen Anlagefläche verlaufenden rillenartigen Freimachungen versehen sein. - Beim Einfügen des säulenartigen Stützers in ein Kapselungsrohr stellt sich der Standkörper unter Belastung selbsttätig so ein, dass die rillenartigen Freimachungen parallel bzw. annähernd parallel zur Längsachse des Kapselungsrohres verlaufen.

In weiterer Ausgestaltung der Erfindung erfolgt die gegenseitige stabile Zuordnung von Elektrode und Standkörper sowie die elektrische Anbindung der Elektrode an das Kapselungsrohr in der Weise, dass die Elektrode mit einem mittig zur Gelenkpfanne angeordneten hohlzylindrischen Befestigungsstutzen versehen ist, dass in den Befestigungsstutzen ein mit einem Bund versehener Tragbolzen zur Halterung des Standkörpers eingesetzt ist, wobei der mit einer zentralen zylindrischen Bohrung versehene Standkörper den Befestigungsstutzen umgibt und mit einer Ringschulter den Bund des Tragbolzens hintergreift, und dass das Kontaktelement aus einem in einer Durchgangsbohrung des Tragbolzens angeordneten Kontaktstifts besteht, der unter der Einwirkung einer sich an der Elektrode abstützenden, elektrisch leitenden Druckfeder besteht. Eine derartige Ausgestaltung ist leicht herstellbar und leicht montierbar.

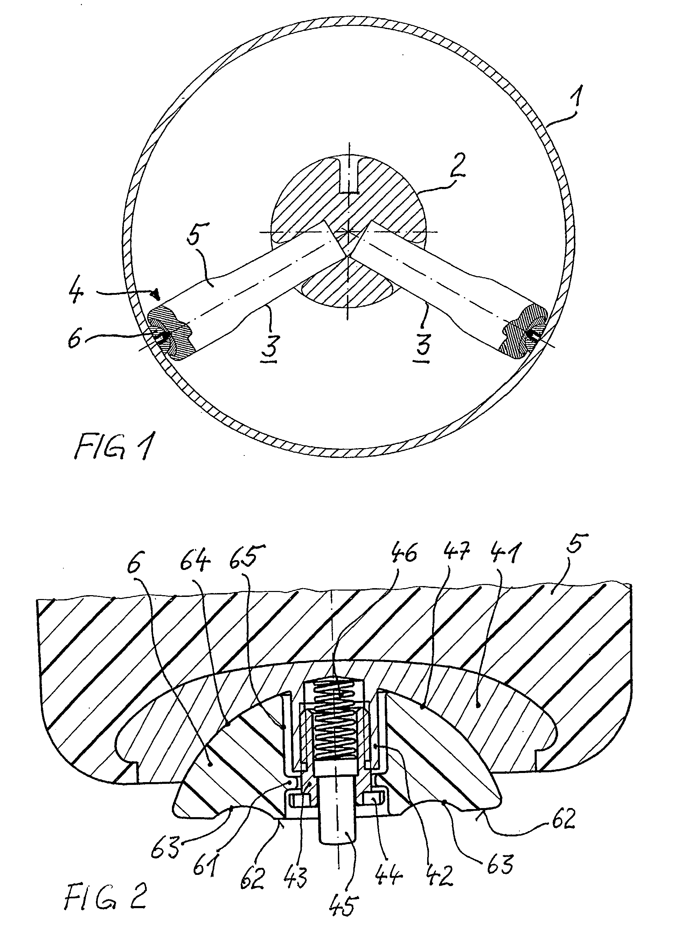

Ein Ausführungsbeispiel des neuen säulenförmigen Stützers ist in den Figuren 1 und 2 dargestellt.

Dabei zeigt
Figur 1 in Anlehnung an Figur 1 der DE 195 15 308 C1 einen Querschnitt eines einphasigen, gasisolierten Rohrleiters, wobei sich ein rohrförmiger Innenleiter mittels zweier säulenförmiger Stützer an einem eine Kapselung bildenden rohrförmigen Außenleiter abstützt, und
Figur 2 den Fußbereich des säulenförmigen Stützers in vergrößerter Darstellung.

Gemäß Figur 1 befindet sich in einem rohrförmigen Außenleiter 1 ein auf Hochspannung liegender Innenleiter 2, der sich über säulenförmige Stützer 3 an dem rohrförmigen Außenleiter 1 abstützt. Jeder säulenförmige Stützer 3 besteht aus einem in eine Aufnahme des Innenleiters 2 eingesteckten Isolatorkörper 5 und einem im Fußbereich 4 des Isolatorkörpers angeordneten Standkörper 6.

Gemäß Figur 2 ist in den Fußbereich 4 des Isolatorkörpers 5 eine Elektrode 41 eingebettet, die über einen Kontaktstift 45 und eine elektrisch leitende Druckfeder 46 mit dem hier nicht näher dargestellten Außenleiter 1 in elektrischer Verbindung steht. Zur Halterung des Kontaktstiftes ist die Elektrode mit einem Befestigungsstutzen 42 versehen, in den ein Tragbolzen 43 eingeschraubt ist. Der Tragbolzen hat eine nicht näher bezeichnete ringförmige Schulter, an der der Kontaktstift 45 mit einem entsprechenden Bund anliegt und dadurch verliersicher gehalten ist.

Der Tragbolzen 43 weist an seinem äußeren Ende einen Bund 44 auf, der zur Halterung des Standkörpers 6 dient, wozu dieser mit einer umlaufenden Ringschulter 61 versehen ist.

Die Elektrode 41 ist als Gelenkpfanne ausgebildet und hierzu mit einer konkav-kugeligen Gelenkfläche 47 versehen. Zur Abstützung an dieser Gelenkfläche ist der Standkörper 6 mit einer konvex-kugeligen Abstützfläche 64 versehen. Der Standkörper 6 bildet dabei im Prinzip ein Kugelsegment, dessen Schnittfläche die Auflagefläche des Standkörpers bildet. Im vorliegenden Fall ist die Auflagefläche 62 jedoch speziell strukturiert; sie ist zum einen an die Krümmung des das Kapselungsrohr bildenden Außenleiters 1 angepasst und zum anderen mit zwei beidseits des Kontaktstiftes 45 parallel zueinander verlaufenden rillenartigen Freimachungen 63 versehen. Im Übrigen ist der Standkörper mit einer zentralen Bohrung 65 versehen, um mit Spiel auf den Befestigungsstutzen 42 der Elektrode 41 aufgesteckt und dort mittels des Bundes 44 des Tragbolzens 43 und der Ringschulter 61 beweglich angeordnet sein.

## Patentansprüche

1. Säulenförmiger Stützer (3) zur isolierenden Abstützung eines Hochspannungsleiters (2) in einem Kapselungsrohr (1) einer gasisolierten Rohrleiteranlage,
bestehend aus einem Isolatorkörper (5) und einem gesonderten, im Fußbereich des Stützers angeordneten Standkörper (6), wobei der Isolatorkörper zur Aufnahme des Standkörpers eine kugelige Gelenkpfanne (41, 47) aufweist, in der sich der Standkörper mittels einer konvex ausgebildeten sphärischen Oberfläche (64) gelenkopfartig abstützt,
**dadurch gekennzeichnet, dass**
die Gelenkpfanne aus einer im Fußbereich (4) des Isolatorkörpers eingebetteten Elektrode (41) besteht, die mit einem der Kontaktierung des Kapselungsrohres (1) dienenden Kontaktelement (45, 46) versehen ist,
und dass der Standkörper (6) an der Elektrode (41) bewegbar gehaltert ist, wobei das Kontaktelement (45, 46) durch den Standkörper hindurchgeführt ist.

2. Säulenförmiger Stützer nach Anspruch 1,
**dadurch gekennzeichnet, dass**
die Elektrode mit einem mittig zur Gelenkpfanne (47) angeordneten hohlzylindrischen Befestigungsstutzen (42) versehen ist,
dass in den Befestigungsstutzen (42) ein mit einem Bund (44) versehener Tragbolzen (43) zur Halterung des Standkörpers (6) eingesetzt ist,
wobei der mit einer zentralen zylindrischen Bohrung (65) versehene Standkörper (6) den Befestigungsstutzen (42) umgibt und mit einer Ringschulter (61) den Bund (44) des Tragkörpers (43) hintergreift,
und dass das Kontaktelement aus einem in einer Durchgangsbohrung (65) des Tragbolzens angeordneten Kontaktstift (45) besteht, der unter der Einwirkung einer sich an der Elektrode abstützenden, elektrisch leitenden Druckfeder (46) steht.

3. Säulenförmiger Stützer nach Anspruch 1 oder 2,
**dadurch gekennzeichnet, dass** die Auflagefläche (62) des Standkörpers eine an die Krümmung des Kapselungsrohres (1) angepasste Krümmung aufweist.

4. Säulenförmiger Stützer nach einem der Ansprüche 1 bis 3,
**dadurch gekennzeichnet, dass** die Auflagefläche (62) des Standkörpers mit zwei beidseits des Kontaktelementes (45, 46) parallel zueinander verlaufenden rillenartigen Freimachungen (63) versehen ist.

5. Säulenförmiger Stützer nach einem der Ansprüche 1 bis 4,
**dadurch gekennzeichnet, dass** der Standkörper (6) aus einem mit PTFE-Fasern gefüllten Polyoxymethylen (POM) besteht.

## Claims

1. Columnar post insulator (3) for supporting a high-voltage conductor (2) in an encapsulation tube (1) of a gas-insulated tubular conductor system in an insulated manner, comprising an insulator body (5) and a separate stand body (6) which is arranged in the foot region of the post insulator, wherein the insulator body has a spherical joint socket (41, 47) for receiving the stand body, the stand body being supported in the said joint socket in the manner of a joint head by means of a convex spherical surface (64), **characterized in that** the joint socket comprises an electrode (41) which is embedded in the foot region (4) of the insulator body and which is provided with a contact element (45, 46) which serves to make contact with the encapsulation tube (1), and **in that** the stand body (6) is held on the electrode (41) such that it can move, wherein the contact element (45, 46) is routed through the stand body.

2. Columnar post insulator according to Claim 1, **characterized in that** the electrode is provided with a hollow-cylindrical fastening connection piece (42) which is arranged centrally in relation to the joint socket (47), **in that** a supporting bolt (43), which is provided with a collar (44), for holding the stand body (6) is inserted into the fastening connection piece (42), wherein the stand body (6), which is provided with a central cylindrical bore (65), surrounds the fastening connection piece (42) and engages behind the collar (44) of the supporting body (43) by way of an annular shoulder (61), and **in that** the contact element is composed of a contact pin (45) which is arranged in a passage bore (65) in the supporting bolt and which is acted on by an electrically conductive compression spring (46) which is supported on the electrode.

3. Columnar post insulator according to Claim 1 or 2, **characterized in that** the bearing surface (62) of the stand body has a curvature which is matched to the curvature of the encapsulation tube (1).

4. Columnar post insulator according to one of Claims 1 to 3, **characterized in that** the bearing surface (62) of the stand body is provided with two groove-like clearances (63) which run parallel to one another on both sides of the contact element (45, 46).

5. Columnar post insulator according to one of Claims 1 to 4, **characterized in that** the stand body (6) comprises a polyoxymethylene (POM) which is filled with PTFE fibres.

## Revendications

1. Support ( 3 ) en forme de colonne pour supporter de manière isolée un conducteur ( 2 ) de haute tension dans un tuyau ( 1 ) de blindage d'une installation à conducteur tubulaire isolé par du gaz,
constitué d'un isolateur ( 5 ) et d'une assiette ( 6 ) distincte disposée dans la zone de pied du support, l'isolateur ayant, pour la réception de l'assiette, un coussinet ( 41, 47 ) sphérique dans lequel l'assiette s'appuie à la manière d'une tête d'articulation au moyen d'une surface ( 64 ) sphérique convexe,
**caractérisé**
**en ce que** le coussinet est constitué d'une électrode ( 41 ) qui est noyée dans la partie ( 4 ) de pied de l'isolateur et qui est pourvue d'un élément ( 45, 46 ) de contact servant à la mise en contact du tuyau ( 1 ) de blindage,
et **en ce que** l'assiette ( 6 ) est maintenue mobile sur l'électrode ( 41 ), l'élément ( 45, 46 ) de contact traversant l'assiette.

2. Support en forme de colonne suivant la revendication 1, **caractérisé**
**en ce que** l'électrode est pourvue d'un embout ( 42 ) cylindrique creux de fixation disposé au milieu par rapport au coussinet ( 47 ),
**en ce que** dans l'embout ( 42 ) de fixation, est inséré un axe ( 43 ) muni d'un collet ( 44 ) pour le maintien de l'assiette ( 6 ),
dans lequel l'assiette ( 6 ), pourvue d'un trou ( 65 ) cylindrique central, entoure l'embout ( 42 ) de fixation et s'accroche par un épaulement ( 61 ) annulaire derrière le collet ( 44 ) de l'axe ( 43 ),
et **en ce que** l'élément de contact est constitué d'une broche ( 45 ) de contact, qui est disposée dans un trou ( 65 ) traversant de l'axe et qui est soumise à l'action d'un ressort ( 46 ) de compression conducteur de l'électricité et s'appuyant sur l'électrode.

3. Support en forme de colonne suivant la revendication 1 ou 2,
**caractérisé en ce que** la surface ( 62 ) d'appui de l'assiette a une courbure adaptée à la courbure du tuyau ( 1 ) de blindage.

4. Support en forme de colonne suivant l'une des revendications 1 à 3,
**caractérisé en ce que** la surface ( 62 ) d'appui de l'assiette est pourvue de deux évidements ( 63 ) de type en rainure, s'étendant parallèlement entre eux de part et d'autre de l'élément ( 45, 46 ) de contact.

5. Support en forme de colonne suivant l'une des revendications 1 à 4,
**caractérisé en ce que** l'assiette ( 6 ) est en polyoxyméthylène ( POM ) chargé de fibres de PTFE.
